# EUROPEAN PATENT APPLICATION

(11) **EP 4 586 186 A1**
(43) Date of publication of application: **16.07.2025**
(21) Application number: 24151323.3
(22) Date of filing: 11.01.2024
(51) Int. Cl.: G06T 7/00, G06T 7/12

(54) **SUPPORTING THE ASSESSMENT OF IMAGE QUALITY IN MEDICAL IMAGES**

(71) Applicant: Koninklijke Philips N.V., 5656 AG Eindhoven (NL)
(72) Inventor: BRUECK, Heiner Matthias, Eindhoven (NL); YOUNG, Stewart Matthew, Eindhoven (NL); HARDER, Tim Philipp, 5656AG Eindhoven (NL); VON BERG, Jens, Eindhoven (NL); GOOßEN, Andre, Eindhoven (NL); KROENKE-HILLE, Sven, Eindhoven (NL); BYSTROV, Daniel, Eindhoven (NL); WIEBERNEIT, Nataly, Eindhoven (FI)
(74) Representative: Philips Intellectual Property & Standards

(57) **Abstract**

A computer-implemented method of supporting the assessment of image quality in a medical image, is provided. The method comprises: receiving medical image data comprising a medical image (110) representing an anatomical region of a patient; inputting the medical image data into a neural network; predicting, using the neural network, an indication of one or more attention areas (120) in the medical image (110) relevant to the assessment of image quality, in response to the inputting; and outputting the indication of the one or more attention areas (120). The neural network is trained to predict the indication of the one or more attention areas (120) using training data comprising a plurality of training medical images representing the anatomical region, and for each training medical image, corresponding ground truth data comprising an indication of one or more attention areas for the training medical image.

## Description

### FIELD OF THE INVENTION

The present disclosure relates to supporting the assessment of image quality in medical images. A computer-implemented method, a computer program product, and a system, are disclosed.

### BACKGROUND OF THE INVENTION

Accurate diagnosis of medical images relies upon the availability of images with high image quality. Image quality in medical images is affected by factors such as the accuracy with which a patient is positioned in the images, the accuracy with which any implantable devices, such as stents, are positioned in the images, and the presence of image artifacts. If a patient, or an implantable device, is inaccurately-positioned during an imaging procedure, the diagnostic value of a resulting medical image may be compromised. For instance, inaccurate positioning of a patient during an X-ray imaging procedure can result in the obstruction of image features such as bones and joint spaces in a resulting X-ray projection image. Similarly, inaccurate positioning of an implantable device, such as a stent, during an X-ray imaging procedure, can make it difficult to visualise whether the stent has been correctly deployed. Similarly, the presence of image artifacts can also result in the obstruction of image features. Such situations give rise to the need to acquire "re-take" images, which hampers workflow, and also increases X-ray dose to a patient.

The responsibility for assessing image quality during medical imaging procedures lies with the operator of the medical imaging system. In the example of X-ray imaging, this responsibility lies with a Radiographer. During conventional workflow, the Radiographer repetitively positions, observes, and adjusts, the position of the patient with respect to the medical imaging system until the Radiographer is satisfied with the patient's position. The Radiographer then acquires a medical image of the patient. The Radiographer then assesses the image quality of the acquired medical image to verify that it has correctly captured the image features that are relevant to a subsequent diagnosis by a Radiologist. Pending the outcome of the Radiographer's assessment of the image quality, the Radiographer may reposition the patient, or they may adjust the settings of the medical imaging system, and then acquire a "re-take" medical image of the patient. When the Radiographer is satisfied with the image quality of an acquired medical image, the image is sent to the Radiologist who performs a diagnosis using the image. However, the Radiographer's assessment of image quality can be time-consuming. This is because it requires meticulous attention to numerous features in the medical image that are relevant to the subsequent diagnosis by the Radiologist.

Consequently, there is a need to support the operators of medical imaging systems in their assessment of image quality in medical images.

### SUMMARY OF THE INVENTION

According to one aspect of the present disclosure, a computer-implemented method of supporting the assessment of image quality in a medical image, is provided. The method includes:
receiving medical image data comprising a medical image representing an anatomical region of a patient;
inputting the medical image data into a neural network;
predicting, using the neural network, an indication of one or more attention areas in the medical image relevant to the assessment of image quality, in response to the inputting; and
outputting the indication of the one or more attention areas; and
wherein the neural network is trained to predict the indication of the one or more attention areas using training data comprising a plurality of training medical images representing the anatomical region, and for each training medical image, corresponding ground truth data comprising an indication of one or more attention areas for the training medical image.

The above method provides an indication of one or more attention areas that are relevant to the assessment of image quality in a medical image. The method may indicate one or more attention areas that are relevant to the assessment of patient positioning accuracy, or implantable device positioning accuracy, or the presence of image artifacts, in the medical image, for example. By indicating such attention area(s), the method provides support to an operator of a medical imaging system in their task of assessing image quality in the medical image.

Further aspects, features, and advantages of the present disclosure will become apparent from the following description of examples, which is made with reference to the accompanying drawings.

### BRIEF DESCRIPTION OF THE DRAWINGS

Fig. 1 is a flowchart illustrating an example of a method of supporting the assessment of image quality in a medical image, in accordance with some aspects of the present disclosure.
Fig. 2 is a schematic diagram illustrating an example of a system 200 for supporting the assessment of image quality in a medical image, in accordance with some aspects of the present disclosure.
Fig. 3 is an example of a training medical image 110^{T}, in accordance with some aspects of the present disclosure.
Fig. 4 is an example of an indication of one or more attention areas 120^{T} for the training medical image 110^{T} illustrated in Fig. 3, in accordance with some aspects of the present disclosure.
Fig. 5 is an example of an outputted indication of one or more attention areas 120 in a medical image 110 relevant to the assessment of image quality, in accordance with some aspects of the present disclosure.
Fig. 6 is an example of an indication of one or more attention areas 120 in a medical image 110 relevant to the assessment of image quality, and an image quality metric 130, in accordance with some aspects of the present disclosure.
Fig. 7 is a flowchart illustrating an example of a method of providing a training dataset relevant to the assessment of image quality in a medical image, in accordance with some aspects of the present disclosure.

### DETAILED DESCRIPTION OF EMBODIMENTS

Examples of the present disclosure are provided with reference to the following description and figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a computer-implemented method, may be implemented in a computer program product, and in a system, in a corresponding manner.

In the following description, reference is made to a computer-implemented method of supporting the assessment of image quality in a medical image. In some examples, reference is made to the medical image being an X-ray projection image. It is, however, to be appreciated that the medical image may alternatively be another type of medical image. For instance, the medical image may alternatively be a spectral X-ray projection image, a (spectral) computed tomography "CT" image, a magnetic resonance imaging "MRI" image, an ultrasound image, a single photon emission computed tomography "SPECT" image, a positron emission tomography "PET" image, and so forth.

In the following description, reference is made to examples in which the anatomical region represented in the medical image is the knee. It is, however, to be appreciated that the anatomical region represented in the medical image may alternatively be another type of anatomical region. In general, the anatomical region may be any anatomical region. For instance, the anatomical region may alternatively be an ankle, a wrist, an elbow, the heart, and so forth.

In the following description, reference is made to various methods that are implemented by a computer, i.e. by a processor. It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The functions of one or more of the method features may for instance be provided by processors that are shared within a networked processing architecture such as a client/server architecture, a peer-to-peer architecture, the Internet, or the Cloud.

The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid-state memories, magnetic tape, removable computer disks, random access memory "RAM", read-only memory "ROM", rigid magnetic disks and optical disks. Current examples of optical disks include compact disk-read only memory "CD-ROM", compact disk-read/write "CD-R/W", Blu-Ray^{™} and DVD.

It is also noted that some operations that are described as being performed in the computer-implemented methods disclosed herein may be implemented using artificial intelligence techniques. Suitable techniques may include machine learning techniques, deep learning techniques, and neural networks. For instance, one or more neural networks, may be trained in a supervised, or in some cases unsupervised, manner, to implement the operations performed in the computer-implemented methods disclosed herein.

As mentioned above, there is a need to support the operators of medical imaging systems in their assessment of image quality in medical images.

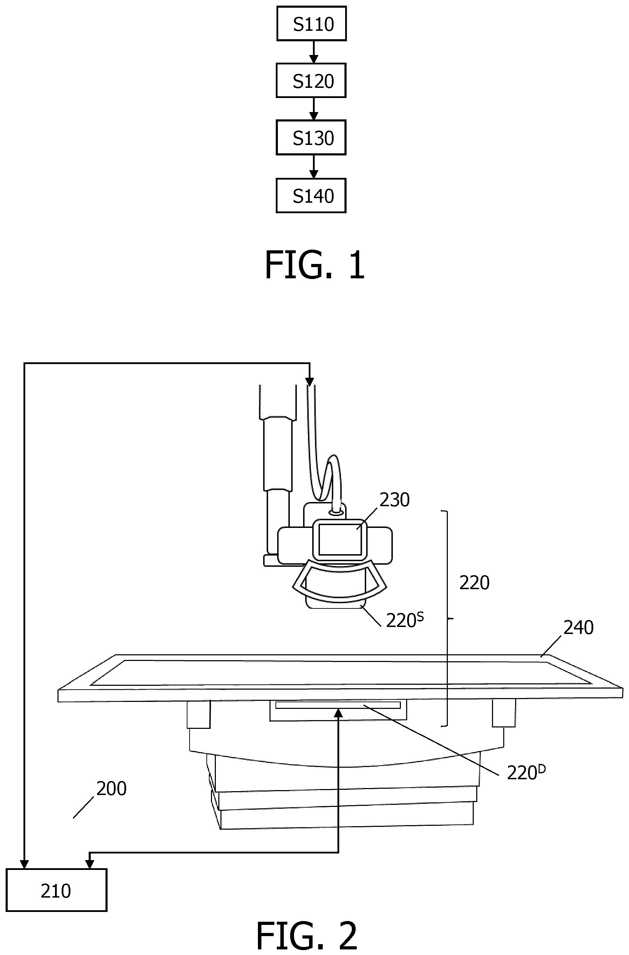

Fig. 1 is a flowchart illustrating an example of a method of supporting the assessment of image quality in a medical image, in accordance with some aspects of the present disclosure. Fig. 2 is a schematic diagram illustrating an example of a system 200 for supporting the assessment of image quality in a medical image, in accordance with some aspects of the present disclosure. It is noted that operations that are described in relation to the method illustrated in Fig. 1, may also be performed by the one or more processors 210 of the system 200 illustrated in Fig. 2. Likewise, operations that are described as being performed by the one or more processors 210 of the system 200 illustrated in Fig. 2, may also be performed in the method described with reference to Fig. 1. With reference to Fig. 1, and Fig. 2, the computer-implemented method of supporting the assessment of image quality in a medical image, comprises:
receiving S110 medical image data comprising a medical image 110 representing an anatomical region of a patient;
inputting S120 the medical image data into a neural network;
predicting S130, using the neural network, an indication of one or more attention areas 120 in the medical image 110 relevant to the assessment of image quality, in response to the inputting; and
outputting S140 the indication of the one or more attention areas 120; and
wherein the neural network is trained to predict the indication of the one or more attention areas 120 using training data comprising a plurality of training medical images 110^{T} representing the anatomical region, and for each training medical image, corresponding ground truth data comprising an indication of one or more attention areas 120^{T} for the training medical image.

The above method provides an indication of one or more attention areas that are relevant to the assessment of image quality in a medical image. The method may indicate one or more attention areas that are relevant to the assessment of patient positioning accuracy, or implantable device positioning accuracy, or the presence of image artifacts, in the medical image, for example. By indicating such attention area(s), the method provides support to an operator of a medical imaging system in their task of assessing image quality in the medical image.

The operations in the method illustrated in Fig. 1, are described in more detail below.

Referring initially to the operation S 110; in this operation, medical image data is received. The medical image data comprises a medical image 110 representing an anatomical region of a patient.

The medical image data may be generated by various types of medical imaging systems, including two-dimensional "2D" imaging systems, and three-dimensional "3D", or volumetric, imaging systems. Examples of 2D medical imaging systems include (spectral) X-ray projection imaging systems, and 2D ultrasound imaging systems. Examples of volumetric imaging systems include MRI systems, (spectral) computed tomography "CT" imaging systems, positron emission tomography "PET" imaging systems, single photon emission computed tomography "SPECT" imaging systems, 3D ultrasound imaging systems, and so forth. Thus, the medical image 110 may for instance be a (spectral) X-ray projection image, a 2D ultrasound image, an MRI image, a (spectral) CT image, a PET image, a SPECT image, a 3D ultrasound image, and so forth. In the example illustrated in Fig. 2, the medical image data is generated by an X-ray projection imaging system 220, and the medical image is an X-ray projection image. The X-ray projection imaging system 220 may be the DigitalDiagnost C90 marketed by Philips Healthcare, Best, the Netherlands, for example.

With continued reference to the operation S110, in general, the medical image 110 may represent any anatomical region of a patient. The anatomical region may for instance be a knee, an ankle, a wrist, an elbow, the heart, and so forth.

The medical image data may be received from various sources in the operation S110. For instance, it may be received from a medical imaging system, such as one of the imaging systems described above. The medical image data may alternatively be received from other sources in the operation S110, such as for example a computer readable storage medium, the Internet, the Cloud, and so forth. The medical image data may be received by the one or more processors 210 illustrated in Fig. 2, for example. In general, the medical image data may be received via any form of data communication. This includes wired data communication, wireless data communication, and also optical fiber data communication. By way of some examples, when wired data communication is used, the communication may take place via electrical signals that are transmitted on an electrical cable. When wireless data communication is used, the communication may take place via RF or infrared signals. When optical fiber data communication is used, the communication takes place via optical signals that are transmitted on an optical fiber.

With continued reference to the method illustrated in Fig. 1; in the operation S120, the medical image data is inputted into a neural network. In the operation S130, an indication of one or more attention areas 120 in the medical image 110 relevant to the assessment of image quality, is predicted using the neural network in response to the inputting. The neural network is trained to predict the indication of the one or more attention areas 120 using training data comprising a plurality of training medical images 110^{T} representing the anatomical region, and for each training medical image, corresponding ground truth data comprising an indication of one or more attention areas 120^{T} for the training medical image.

The neural network may be provided by various architectures. For instance, the neural network may be provided by a U-Net, a vision transformer architecture, a recurrent neural network "RNN", an encoder/ decoder architecture, and so forth. In general, the training of the neural network involves inputting the training data into the neural network, and iteratively adjusting the neural network's parameters until the trained neural network provides an accurate output. The parameters, or more particularly the weights and biases, control the operation of activation functions in the neural network. In supervised learning, the training process automatically adjusts the weights and the biases, such that when presented with the input data, the neural network accurately provides the corresponding expected output data. In order to do this, the value of the loss functions, or errors, are computed based on a difference between predicted output data and the expected output data. The value of the loss function may be computed using functions such as the negative log-likelihood loss, the mean absolute error (or L1 norm), the mean squared error, the root mean squared error (or L2 norm), the Huber loss, or the (binary) cross entropy loss. During training, the value of the loss function is typically minimized, and training is terminated when the value of the loss function satisfies a stopping criterion. Sometimes, training is terminated when the value of the loss function satisfies one or more of multiple criteria.

Various methods are known for solving the loss minimization problem, including gradient descent, Quasi-Newton methods, and so forth. Various algorithms have been developed to implement these methods and their variants, including but not limited to Stochastic Gradient Descent "SGD", batch gradient descent, mini-batch gradient descent, Gauss-Newton, Levenberg Marquardt, Momentum, Adam, Nadam, Adagrad, Adadelta, RMSProp, and Adamax "optimizers". These algorithms compute the derivative of the loss function with respect to the model parameters using the chain rule. This process is called backpropagation since derivatives are computed starting at the last layer or output layer, moving toward the first layer or input layer. These derivatives inform the algorithm how the model parameters must be adjusted in order to minimize the error function. That is, adjustments to model parameters are made starting from the output layer and working backwards in the network until the input layer is reached. In a first training iteration, the initial weights and biases are often randomized. The neural network then predicts the output data, which is likewise, random. Backpropagation is then used to adjust the weights and the biases. The training process is performed iteratively by making adjustments to the weights and biases in each iteration. Training is terminated when the error, or difference between the predicted output data and the expected output data, is within an acceptable range for the training data, or for some validation data. Subsequently the neural network may be deployed, and the trained neural network makes predictions on new input data using the trained values of its parameters. If the training process was successful, the trained neural network accurately predicts the expected output data from the new input data.

The training of a neural network is often performed using a Graphics Processing Unit "GPU" or a dedicated neural processor such as a Neural Processing Unit "NPU" or a Tensor Processing Unit "TPU". Training often employs a centralized approach wherein cloud-based or mainframe-based neural processors are used to train a neural network. Following its training with the training dataset, the trained neural network may be deployed to a device for analyzing new input data during inference. The processing requirements during inference are significantly less than those required during training, allowing the neural network to be deployed to a variety of systems such as laptop computers, tablets, mobile phones and so forth. Inference may for example be performed by a Central Processing Unit "CPU", a GPU, an NPU, a TPU, on a server, or in the cloud.

The neural network described above may be trained to predict the indication of the one or more attention areas 120 by:
for each of a plurality of the training medical images:
inputting the training medical image into the neural network;
predicting an indication of the one or more attention areas 120, using the neural network, in response to the inputting; and
adjusting parameters of the neural network based on a difference between the indication of the one or more attention areas 120 predicted by the neural network, and the corresponding indication of one or more attention areas for the training medical image from the ground truth data; and
repeating the inputting, the predicting, and the adjusting, until a stopping criterion is met.

The attention area(s) 120 that are predicted by the neural network may be relevant to the assessment of various types of image quality in the medical image 110. For instance, the attention areas may be relevant to the assessment of the patient positioning accuracy, or to the assessment of implantable device positioning accuracy, or to the assessment of the presence of image artifacts, in the medical image 110. As mentioned above, these factors, may form part of a medical imaging system operator's assessment of image quality when deciding whether or not to acquire a "re-take" medical image of the patient. The operator may also focus their attention on other attention areas in the medical image in their assessment of the image quality in the medical image, and these attention areas may also be predicted by the neural network.

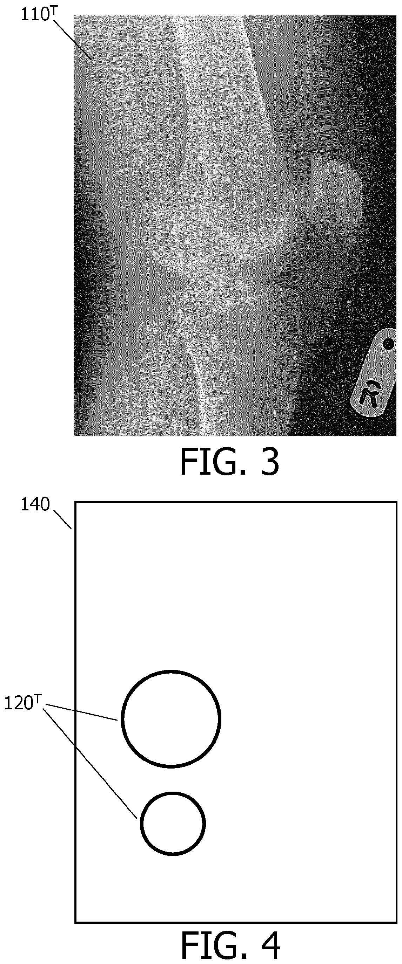

An example of the training data, and the corresponding ground truth data, that are used to train the neural network to predict the indication of the one or more attention areas 120, is illustrated in Fig. 3, and Fig. 4, respectively. Fig. 3 is an example of a training medical image 110^{T}, in accordance with some aspects of the present disclosure. The training medical image 110^{T} illustrated in Fig. 3 represents a lateral knee view, i.e. an orthogonal view of the anterior-posterior "AP" view of the knee wherein the central X-ray beam penetrates the knee along the medial-lateral axis, i.e. orthogonal to the sagittal plane. Fig. 4 is an example of an indication of one or more attention areas 120^{T} for the training medical image 110^{T} illustrated in Fig. 3, in accordance with some aspects of the present disclosure. The indication of the one or more attention areas may be referred-to as an attention map. In the example illustrated in Fig. 4, the attention area(s) are indicated via contours that define areas within the training medical image 110^{T}. In general, the attention areas 120^{T} for the training medical images 110^{T} are relevant to the assessment of image quality. The attention areas 120^{T} in the example illustrated in Fig. 4 are relevant to the patient positioning accuracy in the medical image 110^{T} illustrated in Fig. 3. In this example, the attention areas 120^{T} correspond to the relative displacement of the medial and lateral condyle contours of the distal femur, and the relative position of the fibular head and the tibia, respectively. These are examples of the attention areas that a Radiographer focuses their attention on when deciding whether or not to acquire a "re-take" medical image of the patient.

The attention area(s) 120^{T} may also be indicated in a different manner to the example illustrated in Fig. 3. For instance, in another example, a categorization is contemplated in which the relative importance of the attention areas is indicated. The relative importance of the attention areas may be indicated via shading, or different colours, for example. The attention areas may be indicated in the form of a so-called heatmap, for example. In another example, the attention areas are provided in the form of markers. In another example, the attention areas are provided in text form, e.g. "ensure joint gap between femur and tibia is visible along its entire length", or "ensure that the medial and lateral condyle contours of the distal femur are lying on top of each other".

The training data that is used to train the neural network may include training medical images 110^{T} , from some tens, hundreds, thousands, or more, different patients. The patients may have a range of different ages, body mass index, co-morbidities, and so forth.

In one example, the corresponding indications of the one or more attention areas 120^{T} for the training medical images 110^{T} are provided by expert annotations. For instance, experts may assess training medical images such as the training medical image 110^{T} illustrated in Fig. 3, and provide annotations that indicate the attention areas, such as the contours illustrated in Fig. 4.

The process of curating the training data in the above example can be laborious, however. In another example, the indication of the one or more attention areas 120^{T} for the training medical images 110^{T} is determined by tracking the eyes of a reviewer whilst the reviewer assesses image quality in the training medical images. In this example, the indication of the one or more attention areas 120^{T} may be determined by tracking the eyes of the reviewer, e.g. using a camera, and determining the focus of the reviewer's attention whilst the reviewer assesses image quality in the training medical images. The focus of the reviewer's attention may be determined based on factors such as the duration the eyes fixate on a particular area in a training medical image, the velocity of the eyes between different areas in a training medical image, the distance moved by the eyes between different areas in a training medical image, and so forth. Tracking the eyes of the reviewer in this manner saves time in curating the neural network's training data. It also enables the indication of the one or more attention areas 120^{T} for the training medical images 110^{T} to be determined automatically during a medical imaging session.

An example of an eye-technique that may be used to track the eyes of the reviewer in accordance with this example is described in a document by Wang, S., et al., "Follow My Eye: Using Gaze to Supervise Computer-Aided Diagnosis", arxiv.org/abs/2204.02976v1. It is noted that whilst this document describes the tracking of the eyes of a reviewer whilst the reviewer performs a diagnosis using medical images, in this example of the present disclosure, the reviewer instead assesses image quality in the medical images.

In this example, the reviewer of the medical images may be a clinical expert, or a trained annotator, or an operator of the medical imaging system that generates the training medical images 110^{T}. In the example of the training medical images 110^{T} being an X-ray projection image, the reviewer may be a Radiographer. As described above, a Radiographer reviews medical images by assessing image quality in the medical images when deciding whether or not to acquire a "re-take" medical image of the patient. The Radiographer's role contrasts with that of a Radiologist, i.e. a different medical professional, and who performs a different role, i.e. that of performing a diagnosis using the medical image. Due to the differences in their roles, the Radiographer, and the Radiologist, focus their attention on different areas in a medical image. For example, the Radiographer may be interested in the patient positioning accuracy, or implantable device positioning accuracy, or the presence of image artifacts, in the medical image, Consequently, the Radiographer may focus their attention on features such as the relative positions of bones in the images, the visibility of joint spaces, regions in which image artifacts may be expected, and so forth. By contrast, the Radiologist may be interested in searching for bone fractures in the image, or in looking for calcium deposits in the vasculature, or in looking for deteriorated tissue in the images, and so forth. Consequently, whilst the Radiologist, and the Radiographer both review medical images, they focus their attention on different areas in the medical images. A similar separation between roles of the operator of the medical imaging system, and the role of the diagnostician, also exists for other imaging modalities.

Returning to the method illustrated in Fig. 1, in the operation S140, an indication of the one or more attention areas 120 that are predicted by the neural network, is outputted. The indication of the one or more attention areas 120 may be outputted in various ways in the operation S140. For instance, the indication of the one or more attention areas 120 may be outputted in the form of an image, or in an audio format, or in text format. The indication of the one or more attention areas 120 may be outputted to a display device such as to the display 230 illustrated in Fig. 2, or to a virtual/ augmented reality display device, or to a computer-readable storage medium, or to the Internet, or to the Cloud, and so forth.

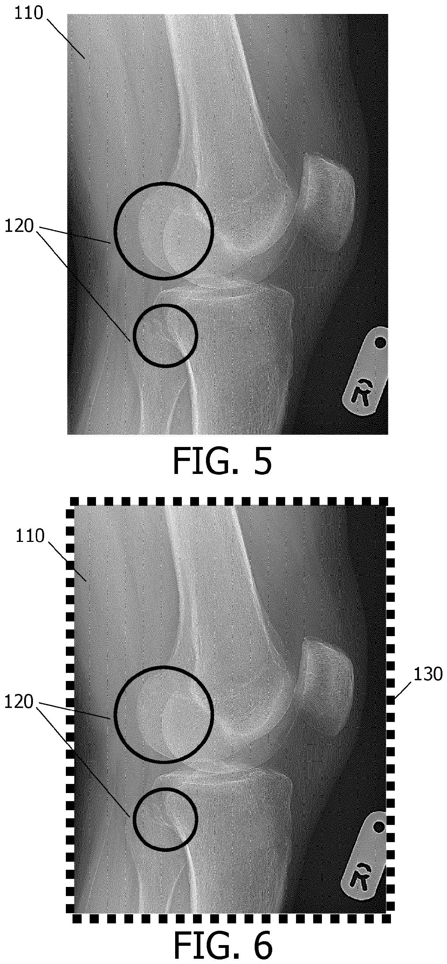

Fig. 5 is an example of an outputted indication of one or more attention areas 120 in a medical image 110 relevant to the assessment of image quality, in accordance with some aspects of the present disclosure. In this example, the indication of one or more attention areas 120 is outputted in the form of an overlay image comprising the medical image 110 that was inputted into the neural network, i.e. the image illustrated in Fig. 5, and contours that delineate the predicted attention areas 120. In accordance with the ground truth attention areas 120^{T} described above in relation to Fig. 4, the predicted attention areas 120 in the example illustrated in Fig. 5 are relevant to patient positioning accuracy in the medical image 110;

The indication of the attention area(s) 120 may alternatively be outputted in a different manner to that illustrated in Fig. 5. For instance, in another example, the indication of one or more attention areas 120 is outputted in the form of the medical image 110 overlaid with icons, such as arrows, that indicate the attention areas. In another example, the indication of one or more attention areas 120 may be outputted in the form of the medical image 110 overlaid with a heatmap wherein shading, or different colours of the heatmap indicate the relative importance of the attention area(s) 120. In another example, the indication of one or more attention areas 120 may be outputted in the text format, e.g. as a list of the attention area(s) 120. In another example, the indication of one or more attention areas 120 may be outputted in the form of an audio message.

One or more additional operations may be performed in the computer-implemented method described above with reference to Fig. 1, as described in the examples below.

In one example, the neural network is further trained to predict a value of an image quality metric 130 for the anatomical region represented in the medical image 110. In this example, the method illustrated in Fig. 1 includes:
predicting, using the neural network, a value of the image quality metric 130 for the anatomical region represented in the medical image 110, in response to the inputting; and
outputting the value of the predicted image quality metric 130; and
wherein the ground truth data further comprises, for each training medical image, a value of the image quality metric.

The image quality metric in this example may have a binary value. The image quality metric may represent an acceptability of the image. An example of an image quality metric with a binary value representing the acceptability of the image is "image quality is acceptable" versus "image quality is not acceptable". An example of an image quality metric with a binary value is illustrated in Fig. 6, which is an example of an indication of one or more attention areas 120 in a medical image 110 relevant to the assessment of image quality, and an image quality metric 130, in accordance with some aspects of the present disclosure. In the example illustrated in Fig. 6, the value of the image quality metric 130, in this example a binary value representing the acceptability of the image, is indicated via the colour of a border around the medical image 110. In this example, a green border indicates that the image quality in the image 110 is acceptable, and a red border indicates that the image quality in the image 110 is unacceptable. A binary value of an image quality metric may alternatively be outputted in a different manner to that illustrated in Fig. 6. For instance, text, or an icon, may be outputted in order to indicate the acceptability of the image quality in the image 110. Instead of representing the image quality metric as a binary value, the image quality metric may alternatively have one of more than two values. For example, the value of the image quality metric may be expressed as a percentage indicating a range of values from poor image quality to high image quality. In one example, separate image quality metrics are provided for different image quality factors. For instance, an image quality metric may be provided for one or more of: the patient positioning accuracy, the implantable device positioning accuracy, the presence of image artifacts.

In some examples, the value of the image quality metric for the training medical images is determined based on a reviewer assessment of image quality in the training medical images. For instance, a reviewer may be invited to provide their assessment of the image quality metric for the training medical images 110^{T} by inputting, e.g. by selecting, a value for the image quality metric. Alternatively, the value of the image quality metric for the training medical images 110^{T} may be determined automatically during a medical imaging session. For instance, the value of the image quality metric may be determined automatically based on whether or not an operator of the medical imaging system, e.g. the Radiographer, acquired a re-take image, for example. This avoids burdening the reviewer with an additional data input task. Information defining whether of not a re-take image was acquired may be obtained from a record of the imaging procedure.

In another example, the neural network makes predictions using imaging session metadata that is relevant to the assessment of image quality in the medical image. In this example, the method illustrated in Fig. 1 includes:
receiving imaging session metadata relevant to the assessment of image quality in the medical image 110;
inputting the imaging session metadata into the neural network; and
predicting, using the neural network, the indication of one or more attention areas 120 and/or the value of the image quality metric 130, based on the imaging session metadata, in response to the inputting; and
wherein the training data further comprises imaging session metadata corresponding to the training medical images.

In this example, the imaging session metadata may include information such as an orientation of the medical image acquired during the imaging session, e.g. a lateral knee view, a posteroanterior "PA" chest view, and so forth. Alternatively or additionally, the imaging session metadata may include information such as patient age, body mass index "BMI", patient comorbidities, a duration of the medical imaging procedure, and so forth. The imaging session metadata may be obtained from the examination instruction for the imaging session. The imaging session metadata may inform the neural network of factors that require a change in the attention areas, or factors that explain anomalies in the medical image 110, and consequently it improves the predictions made by the neural network. For instance, if a patient has a comorbidity that affects the patient's mobility, the neural network may use this information to widen the image quality acceptance criteria for the image, and consequently deem an image in which a patient is poorly-positioned as having acceptable image quality. The duration of the medical imaging procedure may indicate that the positioning of the patient is difficult, and consequently inform the neural network that wider image quality acceptance criteria should be used for the assessment of the image quality. Imaging session metadata corresponding to the training medical images may be obtained from a record of the imaging procedure.

In another example, at inference, a reviewer's eyes are tracked in order to identify reviewer attention areas. The reviewer attention areas are determined based on the focus of the reviewer's attention when the reviewer assesses the image quality of the image. The reviewer attention areas are then used by the neural network to make its predictions. In this example, the method illustrated in Fig. 1 includes:
tracking the eyes of a reviewer whilst the reviewer assesses image quality in the received medical image 110 to provide an indication of one or more reviewer attention areas for the received medical image;
inputting the indication of one or more reviewer attention areas into the neural network; and
predicting, using the neural network, the indication of one or more attention areas 120 and/or the value of the image quality metric 130, based on the indication of one or more reviewer attention areas, in response to the inputting.

In this example, the eyes of the reviewer may be tracked using the technique described above. The reviewer may be the operator of the medical imaging system, e.g. the Radiographer. The training data that is used to train the neural network in this example also includes, as an input to the neural network, an indication of one or more attention areas for the training image that is likewise obtained by tracking the eyes of the reviewer of the training images. Using the reviewer attention areas in accordance with this example improves the accuracy of the neural network's predictions. For instance, the neural network may make its predictions based on a correspondence between the reviewer's attention area(s) at inference, and the attention areas 120^{T} of the reviewer of the training medical images 110^{T}.

In another example, at inference, a reviewer's eyes are tracked in order to identify reviewer attention areas, and the reviewer attention areas are stored, together with the medical image being reviewed, in order to provide additional training data for the neural network. As in the previous example, the reviewer attention areas are determined based on the focus of the reviewer's attention when the reviewer assesses the image quality of the image. In this example, the method illustrated in Fig. 1 includes:
tracking the eyes of a reviewer whilst the reviewer assesses image quality in the received medical image 110 to provide an indication of one or more reviewer attention areas for the received medical image;
storing the received medical image 110, and the indication of the one or more reviewer attention areas for the received medical image, for use as an additional training medical image, and corresponding additional ground truth data, respectively; and
further training the neural network to predict the indication of the one or more attention areas 120, using the additional training medical image, and the corresponding additional ground truth data.

In this example, the further training of the neural network with the additional training medical image, and the corresponding additional ground truth data, enables the training of the neural network to be tailored to the preference of a specific reviewer, or reviewer(s) at a specific institution.

In a related example, method illustrated in Fig. 1 also includes:
determining the value of the image quality metric for the received medical image 110 based on a reviewer assessment of the received medical image;
storing the determined value of the image quality metric for the received medical image, for use as further additional ground truth data; and
wherein the further training the neural network to predict the indication of the one or more attention areas 120, is performed using the further additional ground truth data.

In this example, the value of the image quality metric, for example the binary value indicating the acceptability of the image quality in the image 110, is stored, and used to further train the neural network. At inference, the value of the image quality metric may be determined automatically based on whether or not an operator of the medical imaging system, e.g. the Radiographer, acquires a re-take image, for example. This avoids burdening the reviewer with an additional data input task.

In another example, one or more synthetic ground truth attention maps are used to train the neural network. As mentioned above, the process of curating training data for training the neural network is laborious. The use of synthetic ground truth attention maps alleviates some of the effort of this process. In this example, the ground truth data for the training medical images 110^{T} is provided in the form of ground truth attention maps 140 illustrating the one or more attention areas 120^{T} for the corresponding training medical images 110^{T}, and the ground truth attention maps comprise one or more synthetic ground truth attention maps.

In one example, (self-) attention maps are extracted from a second neural network to provide synthetic ground truth attention maps. In this example, the method illustrated in Fig. 1 also includes generating the one or more synthetic ground truth attention maps by:
for each of one or more training medical images:
inputting the training medical image into a second neural network;
predicting, using the second neural network, a value of an image quality metric for the anatomical region represented in the training medical image, in response to the inputting; and
extracting a (self-) attention map from the second neural network to provide the synthetic ground truth attention map, the synthetic (self-) attention map indicating a relative importance of regions of the inputted training medical image in determining the predicted value of the image quality metric;
wherein the second neural network is trained to predict the value of the image quality metric using training data comprising a plurality of training medical images representing the anatomical region, and for each training medical image, corresponding ground truth data comprising a value of the image quality metric for the training medical image.

The training medical images that are used to train the second neural network may be the same training medical images 110^{T} that are used in the examples above to train the neural network to predict the indication of the attention area(s) 120 in the medical image 110 relevant to the assessment of image quality. The corresponding values of the image quality metric for the training medical image may likewise be the same values as those used in the examples above to train the neural network to further predict the value of the image quality metric 130 for the anatomical region represented in the medical image 110.

In another example, a second neural network is used to predict a synthetic ground truth attention map. In this example, the method illustrated in Fig. 1 includes generating the one or more synthetic ground truth attention maps using a second neural network wherein the second neural network is trained to generate the synthetic ground truth attention maps using a class-contrastive self-supervised learning approach. An example of a class-contrastive self-supervised learning approach is as follows. A training dataset is collected. The training dataset comprises the training medical images and a weak label indicating whether or not a re-take of each image has been acquired. It may be assumed that the last re-take image in a series represents the highest image quality. A second neural network is constructed in such a way that the inputted medical images are encoded to a vector having a length, e.g. 512, in a hidden variable space. The second neural network is trained by contrastive self-supervised learning by minimizing e.g. a variant of the noise-contrastive estimation loss function. This loss function takes a number of vector encodings, corresponding to a number of input images, as input, and returns low loss values if similar images are encoded to similar vectors in the hidden variable space.

Here, the similarity of the inputted images is defined as follows. Two images are considered as being similar if one of them has been generated by applying a data-augmentation transformation (taken from a given set of possible transformations, e.g. mirroring, brightness/contrast variations, rotation) to the other image. Alternatively, two images are considered as being similar if the two images share the same weak label, i.e. whether or not a retake has been required after the given image. Both types of similarity may be weighted using factors in the overall loss-function.

Having trained the second neural network to encode similar images in a similar manner, the second neural network can be used to generate attention maps for both the images of the training set, and also for other unseen images. This can be accomplished by methods like Grad-CAM or by deriving self-attention maps in the case of transformer architectures.

In another example, a computer program product is provided. The computer program product comprises instructions which when executed by one or more processors 210, cause the one or more processors to carry out a method of supporting the assessment of image quality in a medical image. The method comprises:
receiving S110 medical image data comprising a medical image 110 representing an anatomical region of a patient;
inputting S120 the medical image data into a neural network;
predicting S130, using the neural network, an indication of one or more attention areas 120 in the medical image 110 relevant to the assessment of image quality, in response to the inputting; and
outputting S140 the indication of the one or more attention areas 120; and
wherein the neural network is trained to predict the indication of the one or more attention areas 120 using training data comprising a plurality of training medical images 110^{T} representing the anatomical region, and for each training medical image, corresponding ground truth data comprising an indication of one or more attention areas 120^{T} for the training medical image.

In another example, a system 200 for supporting the assessment of image quality in a medical image, the system comprising one or more processors 210 configured to:
receive S110 medical image data comprising a medical image 110 representing an anatomical region of a patient;
input S120 the medical image data into a neural network;
predict S130, using the neural network, an indication of one or more attention areas 120 in the medical image 110 relevant to the assessment of image quality, in response to the inputting; and output S140 the indication of the one or more attention areas 120; and
wherein the neural network is trained to predict the indication of the one or more attention areas 120 using training data comprising a plurality of training medical images representing the anatomical region, and for each training medical image, corresponding ground truth data comprising an indication of one or more attention areas for the training medical image.

It is noted that the system 200 may also include one or more of a medical imaging system for providing the medical image data, such as for example the projection X-ray imaging system 220 illustrated in Fig. 1, and which includes an X-ray source 220^{S} and an X-ray detector 220^{D}; a display, such as the display 230 mounted to the X-ray source 220^{S} in Fig. 1, for displaying the indication of the one or more attention areas 120, the received medical image 110, and other outputs generated by the one or more processors 210, and so forth; a patient bed 240; and a user input device (not illustrated in Fig. 1) configured to receive user input in relation to the operations performed by the one or more processors 210, such as a keyboard, a mouse, a touchscreen, and so forth.

In another example, a medical imaging system 220 is provided. The medical imaging system comprises one or more processors 210. The one or more processors 210 are configured to:
receive S110, from the medical imaging system 220, medical image data comprising a medical image 110 representing an anatomical region of a patient;
input S120 the medical image data into a neural network;
predict S130, using the neural network, an indication of one or more attention areas 120 in the medical image 110 relevant to the assessment of image quality, in response to the inputting; and output S140 the indication of the one or more attention areas 120; and
wherein the neural network is trained to predict the indication of the one or more attention areas 120 using training data comprising a plurality of training medical images representing the anatomical region, and for each training medical image, corresponding ground truth data comprising an indication of one or more attention areas for the training medical image.

In another example, a computer-implemented method of providing a training dataset relevant to the assessment of image quality in a medical image is provided. The method comprises:
for each of a plurality of medical images representing an anatomical region of a patient:
displaying S310 the medical image to a reviewer;
tracking S320 the eyes of the reviewer whilst the reviewer assesses image quality in the medical images;
determining S330, based on the tracking, an indication of one or more attention areas relevant to the assessment of image quality;
determining S340, based on an assessment of image quality in the training medical image by the reviewer, a value of an image quality metric for the medical image; and
storing S350 the indication of the one or more attention areas, and the value of the image quality metric, for use as the training dataset.

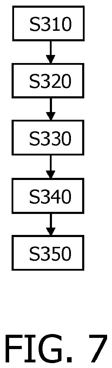

This example is described with reference to Fig. 7, which is a flowchart illustrating an example of a method of providing a training dataset relevant to the assessment of image quality in a medical image, in accordance with some aspects of the present disclosure.

With reference to Fig. 7; in the operation S310, the medical images are displayed to a reviewer. The medical images may be the same medical images as the training medical images 110^{T} described above. In the operation S310, the medical images may be displayed using a display device, such as the display 230 illustrated in Fig. 2. The reviewer may be a clinical expert, a specially-trained annotator, or an operator of the medical imaging system that generates the medical images, as described in the examples above. If the medical image is a (spectral) X-ray projection image, or a (spectral) CT image, the reviewer may be a Radiographer, for example.

In the operation S320, the eyes of the reviewer are tracked whilst the reviewer assesses image quality in the medical images. The eyes of the reviewer may be tracked using the same techniques as described in the examples above. The image quality may be the patient positioning accuracy, or implantable device positioning accuracy, or the presence of image artifacts, in the medical images, for example, as described in the examples above.

In the operation S330, an indication of one or more attention areas relevant to the assessment of image quality, is determined based on the tracking. As described in the examples above, the attention area(s) may be determined based on the focus of the reviewer's attention whilst the reviewer assesses image quality in the medical images. The indication of the attention area(s) may be provided in any of the forms described in the examples above. The focus of the reviewer's attention may be determined based on factors such as the duration the eyes fixate on a particular area in a training medical image, the velocity of the eyes between different areas in a training medical image, the distance moved by the eyes between different areas in a training medical image, and so forth, as described above.

In the operation S340, a value of an image quality metric for the medical image is determined based on an assessment of image quality in the training medical image by the reviewer. The image quality metric may be any of the image quality metrics described in the examples above. The image quality metric may represent an acceptability of the image, for example. In the operation S340, a reviewer may be invited to select a value for the image quality metric. Alternatively the value of the image quality metric may be determined automatically based on whether or not an operator of the medical imaging system, acquired a re-take image.

In the operation S350 the indication of the one or more attention areas, and the value of the image quality metric, are stored for use as the training dataset. The indication of the one or more attention areas, and the value of the image quality metric may be stored to a computer readable storage medium.

The indication of the one or more attention areas, and the value of the image quality metric, that are provided by this example may then be used to train a neural network to perform tasks relating to the assessment of image quality in a medical image. The indication of the one or more attention areas, and the value of the image quality metric, may be used to train the neural network described above with reference to Fig. 1, for example.

The above examples are to be understood as illustrative of the present disclosure, and not restrictive. Further examples are also contemplated. For instance, the examples described in relation to a computer-implemented method, may also be provided by the computer program product, or by the computer-readable storage medium, or by the one or more processors 210 of the system 200, or by the one or more processors 210 of the medical imaging system 220, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

## Claims

1. A computer-implemented method of supporting the assessment of image quality in a medical image, the method comprising:
receiving (S110) medical image data comprising a medical image (110) representing an anatomical region of a patient;
inputting (S120) the medical image data into a neural network;
predicting (S130), using the neural network, an indication of one or more attention areas (120) in the medical image (110) relevant to the assessment of image quality, in response to the inputting; and
outputting (S140) the indication of the one or more attention areas (120); and
wherein the neural network is trained to predict the indication of the one or more attention areas (120) using training data comprising a plurality of training medical images (110^{T}) representing the anatomical region, and for each training medical image, corresponding ground truth data comprising an indication of one or more attention areas (120^{T}) for the training medical image.

2. The computer-implemented method according to claim 1, wherein the neural network is further trained to predict a value of an image quality metric (130) for the anatomical region represented in the medical image (110), and wherein the method further comprises:
predicting, using the neural network, a value of the image quality metric (130) for the anatomical region represented in the medical image (110), in response to the inputting; and
outputting the value of the predicted image quality metric (130); and
wherein the ground truth data further comprises, for each training medical image, a value of the image quality metric.

3. The computer-implemented method according to claim 1 or claim 2, wherein the indication of the one or more attention areas (120^{T}) for the training medical images (110^{T}) is determined by tracking the eyes of a reviewer whilst the reviewer assesses image quality in the training medical images.

4. The computer-implemented method according to any one of claims 2-3, wherein the value of the image quality metric for the training medical images is determined based on a reviewer assessment of image quality in the training medical images.

5. The computer-implemented method according to any one of claims 1-4, wherein for at least one of the training medical images, the corresponding indication of the one or more attention areas (120^{T}) for the training medical images (110^{T}) and/or the value of the image quality metric for the training medical images (110^{T}), are determined automatically during a medical imaging session.

6. The computer-implemented method according to any one of claims 1 - 5, wherein the method further comprises:
receiving imaging session metadata relevant to the assessment of image quality in the medical image (110);
inputting the imaging session metadata into the neural network; and
predicting, using the neural network, the indication of one or more attention areas (120) and/or the value of the image quality metric (130), based on the imaging session metadata, in response to the inputting; and
wherein the training data further comprises imaging session metadata corresponding to the training medical images.

7. The computer-implemented method according to any previous claim, wherein the method further comprises:
tracking the eyes of a reviewer whilst the reviewer assesses image quality in the received medical image (110) to provide an indication of one or more reviewer attention areas for the received medical image;
inputting the indication of one or more reviewer attention areas into the neural network; and
predicting, using the neural network, the indication of one or more attention areas (120) and/or the value of the image quality metric (130), based on the indication of one or more reviewer attention areas, in response to the inputting.

8. The computer-implemented method according to any previous claim, wherein the method further comprises:
tracking the eyes of a reviewer whilst the reviewer assesses image quality in the received medical image (110) to provide an indication of one or more reviewer attention areas for the received medical image;
storing the received medical image (110), and the indication of the one or more reviewer attention areas for the received medical image, for use as an additional training medical image, and corresponding additional ground truth data, respectively; and
further training the neural network to predict the indication of the one or more attention areas (120), using the additional training medical image, and the corresponding additional ground truth data.

9. The computer-implemented method according to claim 8 when dependent on claim 2, wherein the method further comprises:
determining the value of the image quality metric for the received medical image (110) based on a reviewer assessment of the received medical image;
storing the determined value of the image quality metric for the received medical image, for use as further additional ground truth data; and
wherein the further training the neural network to predict the indication of the one or more attention areas (120), is performed using the further additional ground truth data.

10. The computer-implemented method according to any one of claims 1 - 9, wherein the ground truth data for the training medical images (110^{T}) is provided in the form of ground truth attention maps (140) illustrating the one or more attention areas (120^{T}) for the corresponding training medical images (110^{T}), and wherein the ground truth attention maps comprise one or more synthetic ground truth attention maps.

11. The computer-implemented method according to any one of claims 1 - 10, wherein the indication of the one or more attention areas (120) is provided in the form of an attention map illustrating the one or more attention areas.

12. The computer-implemented method according to any one of claims 1 - 10, wherein the image quality is the patient positioning accuracy, or implantable device positioning accuracy, or the presence of image artifacts.

13. A computer program product comprising instructions which when executed by one or more processors (210), cause the one or more processors to carry out the method according to any one of claims 1-12.

14. A system (200) for supporting the assessment of image quality in a medical image, the system comprising one or more processors (210) configured to:
receive (S110) medical image data comprising a medical image (110) representing an anatomical region of a patient;
input (S120) the medical image data into a neural network;
predict (S130), using the neural network, an indication of one or more attention areas (120) in the medical image (110) relevant to the assessment of image quality, in response to the inputting; and
output (S140) the indication of the one or more attention areas (120); and
wherein the neural network is trained to predict the indication of the one or more attention areas (120) using training data comprising a plurality of training medical images representing the anatomical region, and for each training medical image, corresponding ground truth data comprising an indication of one or more attention areas for the training medical image.

15. A computer-implemented method of providing a training dataset relevant to the assessment of image quality in a medical image; the method comprising:
for each of a plurality of medical images representing an anatomical region of a patient:
displaying (S310) the medical image to a reviewer;
tracking (S320) the eyes of the reviewer whilst the reviewer assesses image quality in the medical images;
determining (S330), based on the tracking, an indication of one or more attention areas relevant to the assessment of image quality;
determining (S340), based on an assessment of image quality in the training medical image by the reviewer, a value of an image quality metric for the medical image; and
storing (S350) the indication of the one or more attention areas, and the value of the image quality metric, for use as the training dataset.
